Europäisches Patentamt

European Patent Office

Office européen des brevets

(11) Veröffentlichungsnummer: **0 329 040**

**A2**

(12) **EUROPÄISCHE PATENTANMELDUNG**

(21) Anmeldenummer: **89102373.1**

(22) Anmeldetag: **11.02.89**

(51) Int. Cl.4: **G01F 1/075**

(30) Priorität: **16.02.88 DE 3804786**

(43) Veröffentlichungstag der Anmeldung:
**23.08.89 Patentblatt 89/34**

(84) Benannte Vertragsstaaten:
**AT BE CH FR LI NL SE**

(71) Anmelder: **Hydrometer Gesellschaft mbH**
**Welserstrasse 13**
**D-8800 Ansbach(DE)**

(72) Erfinder: **Ziegler, Horst, Prof. Dr.**
**Steinhauser Weg 13**
**D-4790 Paderborn(DE)**

(74) Vertreter: **Baronetzky, Klaus et al**
**Patentanwalte Dipl.-Ing. Splanemann, Dr. B.**
**Reitzner, Dipl.-Ing. K. Baronetzky Tal 13**
**D-8000 München 2(DE)**

(54) **Volumen- oder Durchflussmessgerät.**

(57) Ein Volumen- oder Durchfluß-Meßgerät entspricht in seinem strömungstechnischen Teil einem klassischen Meßgerät mit mechanischem Zählwerk. Anstelle dieses mechanischen Zählwerkes ist jedoch eine Anordnung von Magnetfeldrichtungssensoren (36, 38) vorgesehen, die das mit dem Meßrad (26) umlaufende Magnetfeld eines Permanentmagneten (32) in seiner Richtungsänderung erfaßt, welches bei einem klassischen Meßgerät zur Mitnahme des getriebenen Teiles der Magnetkupplung zwischen Meßrad und mechanischem Zählwerk dient. Die Ausgangssignale dieser Sensoren (36, 38) werden von einer Auswerteeinheit (58) in die gewünschte Anzeige umgesetzt, welche über ein Kabel (56) mit den von einem Gehäusedeckel (42) getragenen Sensoren (36, 38) verbunden sein kann oder direkt auf diesem Gehäusedeckel angebracht sein kann.

Fig 1

EP 0 329 040 A2

## Volumen- oder Durchflußmeßgerät

Die Erfindung betrifft ein Volumen- oder Durchfluß-Meßgerät gemäß dem Oberbegriff des Anspruches 1.

Derartige Meßgeräte finden insbesondere als Zähler für warmes und kaltes Wasser Verwendung. Das Meßrad kann ein Flügelrad (Drehachse senkrecht zur Strömungsrichtung) oder ein Turbinenrad (Drehachse parallel zur Strömungsrichtung) sein. Bei den klassischen derartigen Meßgeräten besteht die Auswerteeinrichtung aus einem mechanischen Zählwerk; und um die letztere gegen das zu messende Fluid und den Flüssigkeitsdruck zu schützen, Dichtprobleme an den Lagern des Meßrades zu vermeiden und ein Eindringen von Staub und dergleichen zu den Lagern des Meßrades zu verhindern, ist die gesamte Auswerteeinrichtung durch eine Wand strömungsmitteldicht von der eigentlichen Meßkammer getrennt. Die Übertragung der Bewegung des Meßrades auf das Eingangsglied der Auswerteeinrichtung erfolgt unter Verwendung einer drehmomentübertragenden Magnetkupplung, welche einen zusammen mit dem Meßrad umlaufenden Permanentmagneten aufweist. Zur Bereitstellung eines getriebenen Teiles der Magnetkupplung ist das Eingangsglied der Auswerteeinrichtung mit einem magnetischen oder magnetisierbaren Kupplungsteil verbunden.

Derartige mechanische Meßgeräte sind weit verbreitet und bezüglich ihres strömungstechnischen Teiles ausgereift und langlebig. Nachteilig ist an ihnen, daß der Abgleich von Fertigungsschwankungen und das Nacheichen mechanische Einstellarbeiten erfordern, welche sich nicht automatisieren lassen. Oft sind auch die zum mechanischen Nacheichen vorgesehenen mechanischen Einstellmittel im Laufe der Zeit korrodiert oder durch Ablagerungen von Feststoffen schwergängig geworden.

Aus den vorgenannten Gründen wäre es wünschenswert, wenn man ein Meßgerät der eingangs angesprochenen Art so ausbilden könnte, daß es strömungsmäßig den bekannten Meßgeräten mit mechanischer Auswerteeinrichtung entspricht, jedoch leichter justiert werden kann als solche.

Zur Lösung dieser Aufgabe wird durch die Erfindung ein Meßgerät gemäß Anspruch 1 angegeben.

Bei dem erfindungsgemäßen Meßgerät ist die mechanische Auswerteeinrichtung durch eine Magnetfeldsensoranordnung und eine nachgeschaltete Elektronik ersetzt. Das Magnetfeld, welches von dem mit dem Meßrad umlaufenden Permanentmagneten erzeugt wird, wird nun nicht mehr zur Kraftübertragung verwendet, vielmehr nützt man die Abweichung des vom Permanentmagneten erzeugten Magnetfeldes von der Rotationsgeometrie die früher zur Erzeugung eines Mitnahme-Drehmomentes notwendig war, als mit dem Meßrad umlaufende magnetische Markierung aus, die von der Magnetfeldsensoranordnung erfaßt wird und durch die nachgeschaltete Elektronik ausgewertet wird.

Durch die erfindungsgemäße Ausbildung des Meßgerätes wird zugleich erreicht, daß das Meßrad keine mechanische Last mehr anzutreiben braucht. Bei den klassischen bekannten Meßgeräten muß dagegen das in der Praxis bei niedrigen Durchflüssen durchaus ins Gewicht fallende Reibmoment des in der Auswerteeinrichtung enthaltenen Untersetzergetriebes und des hierdurch angetriebenen Zählwerkes überwunden werden. Diese Reibmomente ändern sich darüber hinaus auch im Langzeitbetrieb durch Alterung und Abrieb an Zahnrädern und Lagern.

Ein weiterer Vorteil des erfindungsgemäßen Meßgerätes ist der, daß es leicht auf unterschiedliche Durchflußbereiche kalibriert werden kann. Bei den mechanischen Meßgeräten ist durch Änderung des Übersetzungsverhältnisses des dem mechanischen Zählwerk vorgeschalteten Untersetzergetriebes nur eine grobe Umskalierung der Anzeige möglich. Dies bedeutet, daß man für unterschiedliche Durchsatzbereiche aber auch bei Einheitenänderung (z.B. für Länder mit nichtmetrischen Einheiten oder zur Umstellung auf andere zu messende Fluids als Wasser) den gesamten strömungstechnischen Teil des Meßgerätes neu konstruieren muß. Hierzu sind aufwendige Versuchsreihen erforderlich, da eine geschlossene mathematische Lösung auch unter Verwendung der heute zur Verfügung stehenden Rechner nicht möglich ist.

Die mechanische Zählwerke enthaltenden bekannten Meßgeräte integrieren über den Durchfluß. Die Anzeige hat daher entsprechend nur eine geringe Volumenauflösung (z.B. 1 Liter). Unter Einzelablesung durch eine Person läßt sich so nur ein Durchflußmittelwert über einen längeren Zeitraum rechnerisch bestimmen, und dies schließt aus, daß ein solches Gerät in der Praxis als Durchflußmesser eingesetzt werden kann. Ein erfindungsgemäßes Gerät hat dagegen hohe Volumenauflösung, läßt den momentanen Durchsatz direkt erkennen und kann so gleichermaßen als Volumen- oder Durchfluß-Meßgerät verwendet werden, wobei nur geringfügige Abänderungen an der Auswerteschaltung vorzunehmen sind. Diese kann z .B einfach mit einem Umschalter für die beiden Arbeitsweisen versehen werden.

Die elektronische Auswertung der Ausgangssignale der Magnetfeldsensoranordnung ermöglicht es auch, etwaige Nichtlinearitäten im strömungstechnischen Teil auf elektronischem Wege einfach zu kompensieren. Dies ermöglicht es bei Neukonstruktionen, den strömungstechnischen Teil so zu konzipieren, daß das zu messende Medium möglichst ungestört das Meßgerät durchströmt. Bisher mußte dagegen der strömungstechnische Teil so ausgelegt werden, daß die Anzeige möglichst linear war.

Wegen der praktisch nicht vorhandenen Rückwirkung der Auswerteeinrichtung auf den strömungstechnischen Teil des Ge rätes läßt sich das erfindungsgemäße Meßgerät auch besonders gut zur Messung kleiner Durchsätze verwenden.

Die erfindungsgemäß vorgeschlagene Auswerteeinrichtung läßt sich unter Verwendung auf dem Markt erhältlicher handelsüblicher Komponenten auch sehr preisgünstig herstellen, so daß eine generelle Umrüstung aller nachzueichender Meßgeräte möglich ist, wobei sich die hierbei anfallender Kosten zum großen Teil schon durch die Einsparungen bei dieser ersten Nacheichung hereinholen läßt.

Derart zu erfindungsgemäßen Meßgeräten umgerüstete Meßgeräte eignen sich dann auch für eine spätere Fernablesung, da das in der elektronischen Auswerteeinrichtung bereitgestellte elektrische Meßsignal leicht über Kabel an eine zentrale Ablesestelle weitervermittelt werden kann.

Vorteilhafte Weiterbildungen der Erfindung sind in Unteransprüchen angegeben.

Mit der Weiterbildung der Erfindung gemäß Anspruch 3 wird erreicht, daß ein herkömmliches Meßgerät einfach durch Austausch seines Gehäusedeckels auf ein erfindungsgemäßes Meßgerät umrüstbar ist.

Mit der Weiterbildung der Erfindung gemäß Anspruch 5 wird erreicht, daß die Anzeige des Meßgerätes ungeachtet der Einbaulage des Meßgerätes in horizontaler Richtung ausgerichtet werden kann, so daß stets eine einfache Ablesung gewährleistet ist.

Die Weiterbildung der Erfindung gemäß Anspruch 6 bringt die Möglichkeit einer Fernablesung für den Fall, daß der Hauptteil des Meßgerätes an einer schlecht zugänglichen Stelle eingebaut werden muß.

Mit der Weiterbildung der Erfindung gemäß Anspruch 7 wird eine bequeme Ablesung dann erhalten, wenn zwar das Meßgerät in bequemer Beobachtungshöhe angebracht ist, sein Gehäusedeckel aber schlecht zugänglich ist.

Ein Meßgerät gemäß Anspruch 8 arbeitet über lange Zeiträume hinweg netzunabhängig.

Die Weiterbildungen der Erfindung gemäß Anspruch 9 sind im Hinblick auf die Verminderung des Energieverbrauches des Meßgerätes von Vorteil.

Verwendet man einen Magnetfeldrichtungssensor gemäß Anspruch 10, so ist das Arbeiten des Meßgerätes weitgehend unabhängig von (bezogen auf das Meßrad) axialen Lageabweichungen der Sensoren. Diese brauchen somit in axialer Richtung nicht exakt einjustiert zu werden, können einfach auf einen Gehäusedeckel fest aufgesetzt werden.

Besonders günstig ist es wenn die Komparatoranordnung Komparatorkreise aufweist die jeweils aus einem analog arbeitenden Komparator und einer nachgeschalteten bistabilen Kippschaltung bestehen, wobei letztere jeweils zu Beginn eines Arbeitszyklus in ihren Ausgangszustand zurückgestellt wird. Dies führt zu besonders sauberen und leicht weiterverarbeitbaren Ausgangssignalen des Komparatorkreises.

Ferner besonders günstig ist es, wenn eine Referenzspannungsquelle für die Komparatoranordnung mehrere, unterschiedliche Spannungen bereitstellende Ausgangsklemmen hat und jeweils eine dieser Ausgangsklemmen gemäß der Empfindlichkeit des jeweils zugeordneten Magnetfeldrichtungssensors mit einem zugeordneten Referenzeingang der Komparatoranordnung verbunden ist. Hierdurch kann man auf einfache Weise Fertigungsschwankungen der Magnetfeldsensoren dadurch Rechnung tragen, daß man die ihnen jeweils zugeordnete Schaltschwelle des Komparators entsprechend abändert.

Besonders günstig ist es ferner, wenn die Verbindung zwischen der jeweiligen Ausgangsklemme der Referenzspannungsquelle und dem zugeordneten Eingang der Komparatoranordnung über einen programmierbaren Umschalter erfolgt, der vorzugsweise einen durch digitale Signale programmierbaren Festwertspeicher umfaßt. Hierdurch kann die Einstellung der Komparator-Schaltschwelle einfach durch Zuführen elektrischer Signale von einem externen Programmiergerät her erfolgen.

Besonders günstig ist es ferner, wenn eine zweite Versorgungsschiene über einen zweiten steuerbaren Versorgungsschalter mit der Langzeitbatterie verbindbar ist, welcher zusammen mit dem ersten Versorgungsschalter geschlossen, jedoch später als dieser wieder geöffnet wird, und wenn langsamer arbeitende Schaltkreise der Komparatoranordnung und/oder der Rechenschaltung von der zweiten Versorgungsschiene her gespeist werden. Dies ist auch im Hinblick auf den Energieverbrauch günstig.

Besonders günstig ist es ferner, wenn bei einem derartigen Meßgerät unter den langsamer arbeitenden Schaltkreisen Komparatoren sind, denen zumindest an den mit den Sensoren verbundenen Eingangsklemmen, vorzugsweise auch an den mit den Referenzsignalen beaufschlagten Eingangsklemmen Speicherkreise vorgeschaltet sind, und wenn die Sensoren von der ersten Versorgungsschiene her versorgt werden.

Besonders günstig ist es ferner, wenn bei einem derartigen Meßgerät die Speicherkreise jeweils einen über eine Diode aufladbaren Kondensator aufweisen, wobei die Meßsignalspeicherkreise vorzugsweise zusätzlich einen über diesen Kondensator geschalteten, normalerweise offenen steuerbaren Kurzschlußschalter aufweisen, der gegen Ende eines Arbeitszyklus angesteuert wird.

Besonders günstig ist es ferner, wenn die Rechenschalter einen Korrekturspeicher aufweist, in welchem geschwindigkeitskorrigierte Volumeninkrementsignale abgelegt sind. Hierdurch wird ein lineares Arbeiten des Meßgerätes über den gewünschten Durchflußbereich ermöglicht. Diese ist insbesondere bei der Umrüstung schon vor ner mechanischer Meßgeräte von Wichtigkeit, da diese im strömungstechnischem Teil unter Berücksichtigung der anzutreibenden mechanischen Last, insbesondere der Reibmomente im Untersetzergetriebe und mechanischen Zählwerk ausgelegt wurden. Diese mechanische Last fällt aber bei Umrüstung auf ein erfindungsgemäßes Meßgerät weg. Über den Korrekturspeicher kann auf einfache Weise ein entsprechender Ausgleich geschaffen werden.

Besonders günstig ist es ferner, wenn die Sensoranordnung zwei oder mehr in Umfangsrichtung unter Abstand aufeinanderfolgende Sensoren aufweist, deren Abstand vorzugsweise der nachstehenden Gleichung genügt:

A = 0,5 * W/N * (Z + L(Z)), wobei

W = Winkelperiode des Betrages des Magnetfeldes

N = Anzahl der Sensoren

Z = Sensornummer (1, 2, ..., N)

L(Z) = Verschiebung von Sensor 7 in phasenäquivalente Lage größten Abstandes zunicht phasenäquivalenten Nachbarn.

Diese Ausbildung der Erfindung ist in Hinblick auf eine hohe Auflösung des Meßgeräts von Vorteil, wobei durch die angegebene Wahl des Abstandes aufeinanderfolgender Sensoren der Tatsache Rechnung getragen wird, daß der vom Meßrad angetriebene Permanentmagnet in der Regel sehr kleine Abmessungen aufweist, so daß man bei direkter Nebeneinanderanordnung der Sensoren aufgrund deren Größe schon einen größeren Winkelabstand hätte als im Hinblick auf die Auflösung wünschenswert.

Weitere Einzelheiten, Merkmale und Vorteile der Erfindung ergeben sich aus der nachfolgenden Beschreibung mehrerer Ausführungsbeispiele anhand der Zeichnung. Es zeigen:

Fig. 1 eine Aufsicht auf einen Wasserzähler, wobei von links nach rechts zunehmend Teile des Zählers weggebrochen sind;

Fig. 2 ein elektrisches Blockschaltbild des Wasserzählers nach Fig. 1;

Fig. 3 ein zu Fig. 2 ähnliches Blockschaltbild eines abgewandelten Wasserzählers;

Fig. 4 Einzelheiten eines steuerbaren Speicherkreises für die in den Figuren 2 und 3 gezeigten Schaltungen;

Fig. 5 eine schematische Darstellung eines Magnetfeld-Richtungssensors, wie er in einem Wasserzähler gemäß den Figuren 1 bis 3 verwendbar ist; und

Figur 6: eine Aufsicht auf einen abgewandelten Wasserzähler.

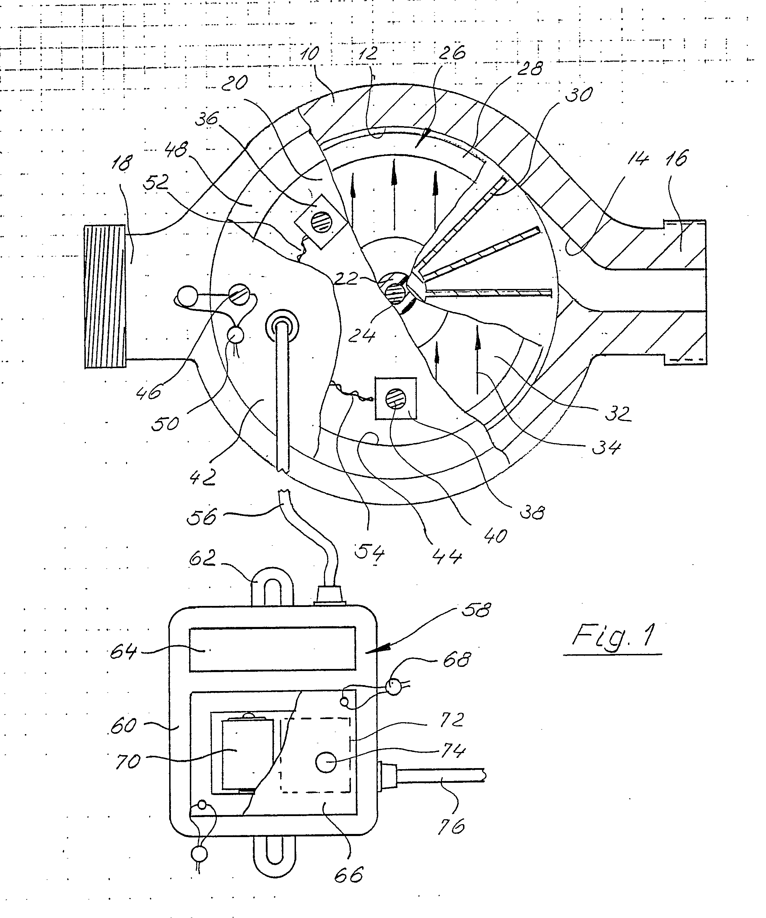

Der in Figur 1 gezeigte Wasserzähler hat ein zylindrisches Gehäuse 10, welches eine Meßkammer 12 begrenzt. In letztere mündet tangential ein Einlaßkanal 14 aus. Dieser steht mit einem Einlaßstutzen 16 in Verbindung. Ein Auslaßstutzen des Gehäuses 10 ist mit 18 bezeichnet.

Die Meßkammer 12 ist unterhalb der Zeichenebene durch den Boden des Gehäuses 10 und über der Zeichenebene durch eine strömungsmitteldicht in das Gehäuse 10 eingesetzte Zwischenwand 20 abgeschlossen. An die Zwischenwand 20 ist ein Lagerauge 22 angeformt, welches das obere Ende einer Welle 24 aufnimmt. Das in der Zeichnung untenliegende Ende der Welle 24 ist ähnlich am Boden des Gehäuses 10 gelagert.

Die Welle 24 trägt ein insgesamt mit 26 bezeichnetes Meßrad mit einer obenliegenden Radscheibe 28 und von dieser nach unten hängenden Flügeln 30. Auf der Oberseite der Radscheibe 28 ist konzentrisch zur Scheibenachse ein ringförmiger Permanentmagnet 32 angebracht. Dieser ist in durchgehend gleicher, zu einer Durchmesserlinie paralleler Richtung magnetisiert, wie durch Pfeile 34 angedeutet. Der Permanentmagnet 32 läuft mit dem Meßrad 26 um, und entsprechend dreht sich auch das von ihm erzeugte Magnetfeld im Raume.

Der Permanentmagnet 32 ist in Figur 1 zu Zwecken der besseren Erläuterung stark vergrößert wiedergegeben. In der Praxis haben derartige Permanentmagnete nur geringe Abmessung z.B. einen Außendurchmesser von etwa 5 mm. Derartige Permanentmagnete dienen bei herkömmlichen Meßgeräten als treibendes Teil einer Magnetkupplung, wobei deren getriebenes Teil koaxial zum Permanentmagneten 32 über der Zwischen wand 20 angeordnet ist und in ähnlicher Richtung permanentmagnetisiert ist wie der Permanentmagnet 32 oder aus magnetisierbarem Material besteht. Dieses getriebene Teil der Magnetkupplung arbeitet auf ein mechanisches Zählwerk.

Damit das Feld des Permanentmagneten 32 die Zwischenwand 20 durchsetzen kann, ist letztere aus einem nicht magnetischen und nicht magnetisierbaren Material hergestellt, in der Praxis oft ebenso wie das Gehäuse 10 aus Messing.

Das hier betrachtete Meßgerät hat nun kein über eine Magnetkupplung vom Meßrad 26 mechanisch angetriebenes Zählwerk sondern eine Sensoranordnung welche auf die Drehung des vom Permanentmagneten 32 erzeugten Magnetfeldes im Raum anspricht und deren Ausgangssignale von einer elektronischen Auswerteschaltung verarbeitet werden, wie nachstehend nun genauer erläutert werden wird.

Diese Sensoranordnung umfaßt einen ersten Magnetfeldrichtungssensor 36 sowie einen zweiten Magnetfeldrichtungssensor 38. Diese beiden Sensoren sind unter gleichem Abstand von der Meßradachse unter einem Winkelabstand von 135 Grad angeordnet.

Die Sensoren sind über Distanzstücke 40 herabhängend von einem Gehäusedeckel 42 getragen, welcher eine über der Zwischenwand 20 liegende Gehäusekammer 44 verschließt, in welcher bei herkömmlichen Meßgeräten das mechanische Zählwerk untergebracht ist. Die Höhe der Distanzstücke 40 ist so gewählt, daß die Magnetfeldrichtungssensoren 36, 38 unter so großem Abstand über der Zwischenwand 20 liegen, daß Fertigungsschwankungen im Abstand zwischen dem Gehäusedeckel 42 und der Zwischenwand 20 aufgenommen werden können. Da die Magnetfeldrichtungssensoren 36, 38 in erster Linie die Magnetfeldrichtung messen, ist ihre Lage in zur Zeichenebene von Figur 1 senkrechter Richtung nicht sehr kritisch.

Der Gehäusedeckel 42 ist durch mehrere in Umfangsrichtung versetzte Schrauben 46 am Gehäuse 10 befestigt, wobei er durch eine Gehäuseschulter 48 abgestützt ist. Mindestens eine der Schrauben 46 ist durch eine insgesamt mit 50 bezeichnete Plombierung gegen unbefugtes Entfernen gesichert.

Von den Magnetfeldrichtungssensoren 36, 38 herkommende Signalleitungen 52, 54 sind über ein Kabel 56 mit einer externen Auswerteeinheit 58 verbunden. Letztere hat ein Gehäuse 60, welches angeformte Laschen 62 zur Befestigung an einer Wand aufweist. Die Oberseite des Gehäuses 60 trägt eine LCD-Anzeige 64. Über einen Deckel 66, der durch Plombierungen 68 gegen unbefugtes Öffnen gesichert ist, ist das Innere des Gehäuses 60 zugänglich. Dort ist eine Langzeitbatterie 70 sowie ein Elektronikblock 72 untergebracht.

Der Deckel 66 trägt einen Taster 74, über welchen die normalerweise ausgeschaltete LCD-Anzeige 64 zur Ablesung des Zählerstandes eingeschaltet werden kann.

Der Zählerstand kann ferner über ein Kabel 76 von einer zentralen Abfragestation her ausgelesen werden.

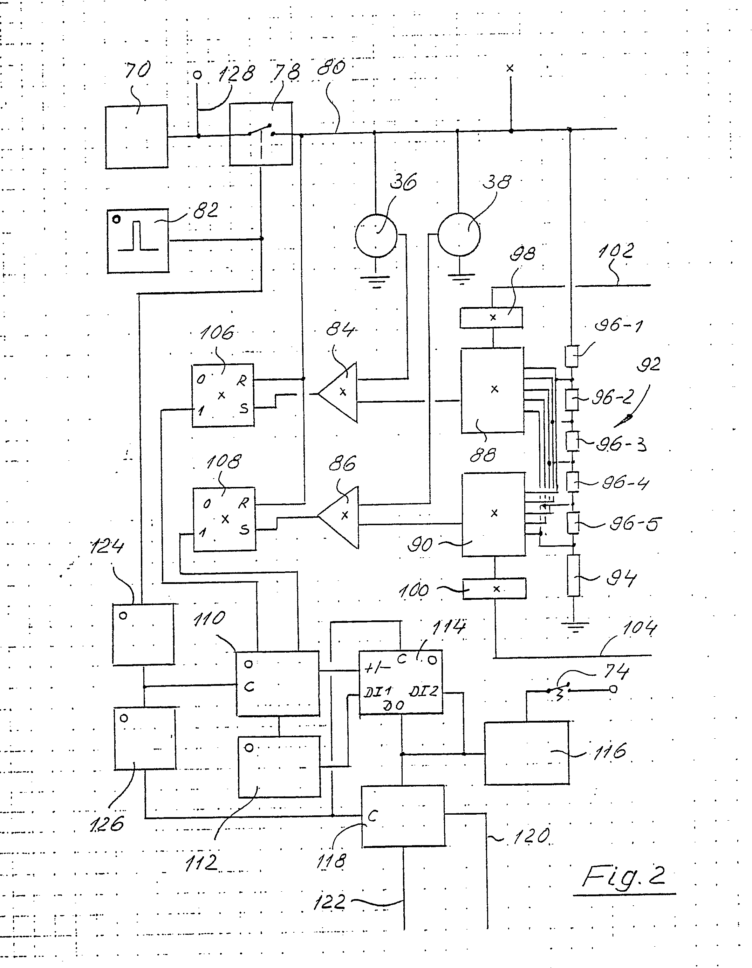

Wie aus Figur 2 ersichtlich, ist die Langzeitbatterie 70 über einen steuerbaren Versorgungsschalter 78 mit einer Versorgungsschiene 80 verbunden.

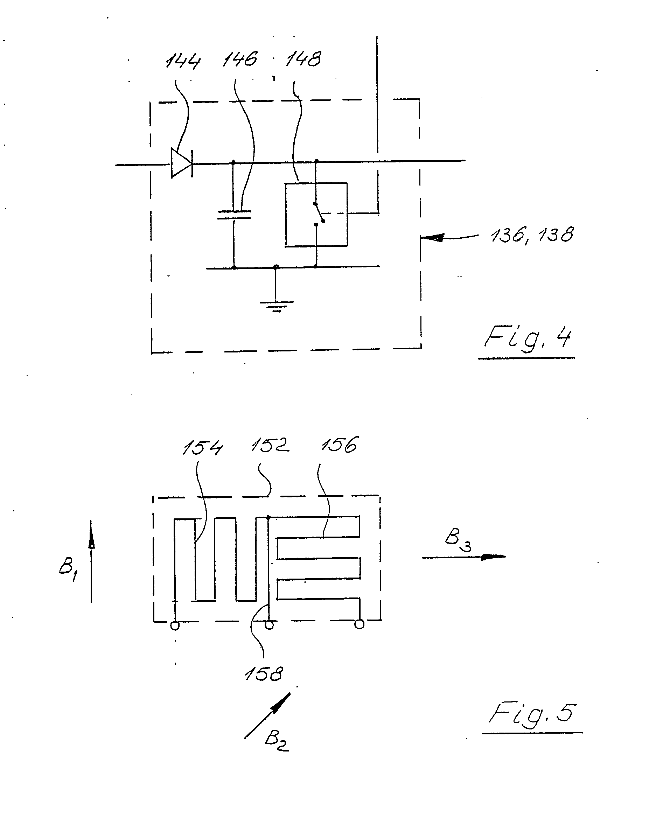

Der Versorgungsschalter 78 wird in regelmäßigen Abständen von einem Taktgeber 82 für kurze Zeit geschlossen. Bei der oben unter Bezugnahme auf Figur 1 beschriebenen Art der Magnetisierung des Permanentmagneten 32 und bei der dort angegebenen räumlichen Anordnung der Magnetfeldrichtungssensoren 36, 38 muß die Arbeitsfrequenz des Taktgebers 82 mindestens das Vierfache der maximal zu erwartenden Drehzahl des Meßrades 26 betragen. Da Magnetfeldrichtungssen soren, wie sie später unter Bezugnahme auf Figur 5 noch verdeutlicht werden, sehr niederohmig sind, stellt sich ein stationäres Ausgangssignal schon rasch nach Anlegen einer Speisespannung ein. Auch für die später noch genauer zu beschreibenden elektronischen Schaltkreise der Auswerteschaltung sind nur kurze Einschwingzeiten zu berücksichtigen. In der Praxis kann daher die Länge der vom Taktgeber 82 bereitgestellten Impulse zwischen 100 und 1000 nsec betragen.

An die Versorgungsschiene 80 sind direkt die Speiseklemmen der Magnetfeldrichtungssensoren 36, 38 angeschlossen. Zweite Klemmen derselben sind wie gezeigt geerdet. Signalausgangsklemmen der Magnetfeldrichtungssensoren 36, 38 sind mit dem einen Eingang eines zugeordneten analog arbeitenden Komparators 84 bzw. 86 verbunden. Der zweite Eingang der Komparatoren 84 und 86 ist über einen steuerbaren Umschalter 88 bzw. 90 mit einem der Abgriffspunkte eines insgesamt mit 92 bezeichneten Spannungsteilers verbunden, der zwischen die Versorgungsschiene 80 und Erde geschaltet ist. Der Spannungsteiler 92 enthält einen großen Widerstand 94 sowie mehrere kleine Eichwiderstände 96-1, 96-2 usw., bei denen die Abgriffspunkte liegen. Die Schaltstellung der Umschalter 88, 90 wird durch Ansteuerung von zugeordneten Festwertspeichern 98, 100 vorgegeben, die über Leitungen 102, 104 von einer externen, in Figur 2 nicht wiedergegebenen Programmiereinheit beschrieben werden können. Bei den Festwertspeichern 98, 100 kann es sich in der Praxis um ein batteriegepuffertes RAM, EEPROM, PROM, EAROM oder ROM handeln.

Die Ausgänge der analog arbeitenden Komparatoren 84, 86 sind jeweils mit der Setzklemme einer zugeordneten bistabilen Kippschaltung 106, 108 verbunden. Die Rückstellklemmen dieser Kippschaltungen sind mit der Versorgungsschiene 80 verbunden.

Die "1"-Ausgangsklemmen der bistabilen Kippschaltungen 106 und 108 sind mit den Eingängen eines Rechenkreises 110 ver bunden.

Der Rechenkreis 110, auf dessen schaltungstechnische Einzelheiten hier nicht näher eingegangen werden soll, arbeitet grob gesprochen folgendermaßen: Unter Berücksichtigung der in vorhergehenden Arbeitszyklen erhaltenen Ausgangssignale bestimmt er diejenige Zeitspanne, die das Meßrad zum Zurücklegen eines Winkelinkrementes (beim betrachteten Ausführungsbeispiel: 45 Grad) benötigt. Je größer diese Zeitspanne, desto kleiner der Durchsatz. Außerdem bestimmt der Rechenkreis 110, ob sich das Meßrad in Vorwärtsrichtung oder Rückwärtsrichtung dreht.

Das erstgenannte Signal, das derjenigen Zeitspanne entspricht, die zwischen dem zuletzt festgestellten Weiterdrehen des Meßrades um ein Winkelinkrement und dem gerade festgestellten Weiterdrehen des Meßrades um ein Winkelinkrement liegt, wird in Form eines zugeordneten elektrischen Signales zur Adressierung eines Korrekturspeichers 112 verwendet. In diesem sind diejenigen Volumina abgelegt, welche gemäß Laboreichung einer Weiterdrehung des Meßrades um ein Winkelinkrement bei der gerade gegebenen Winkelgeschwindigkeit entsprechen. Die Geschwindigkeitsabhängigkeit dieser Volumina beruht auf Reibung, nichtlinearen Strömungsverhältnissen usw.. Das geschwindigkeitskorrigierte Volumeninkrement gelangt auf die erste Dateneingangsklemme DI1 eines Zweirichtungs-Addierkreises 114. Dessen zweiter Dateneingang DI2 ist mit dem Ausgang D0 des Addierkreises verbunden. Eine Auf/Ab-Steuerklemme "+/-" des Addierkreises 114 erhält vom Rechenkreis 110 das die Drehrichtung des Meßrades 26 angebende Signal. Damit arbeitet der Addierkreis 114 insgesamt als die Volumeninkremente aufsummierender Integrator.

Das Ausgangssignal des Addierkreises 114 wird auf den Eingang einer Anzeigeeinheit 116 gegeben, zu welcher die LCD-Anzeige 64 nebst zugehöriger Treiberkreise gehört. Außerdem wird das Ausgangssignal des Addierkreises 114 für eine Schnittstelle 118 bereitgestellt, die über eine Leitung 120 von einer nicht gezeigten zentralen Auslesestation her aktiviert werden kann und dann das Ausgangssignal des Addierkreises 114 auf einer Signalleitung 122 bereitstellt.

Um zu gewährleisten, daß der Rechenkreis 110 erst zu arbeiten beginnt, wenn stationäre Meßverhältnisse eingetreten sind, wird die Taktklemme C des Rechenkreises 110 über einen Verzögerungskreis 124 mit dem vom Taktgeber 82 bereitgestellten Impuls beaufschlagt. Ein weiterer Verzögerungskreis 126 ist zum Verzögerungskreis 124 in Reihe geschaltet und über ihn werden die Taktklemmen C des Addierkreises 114 und der Schnittstelle 118 angesteuert. Die Periode des Verzögerungskreises 126 trägt der Arbeitsgeschwindigkeit des Korrekturspeichers 112 Rechnung.

Die Anzeigeeinheit 116 ist über den normalerweise offenen Taster 74 mit der Versorgungsschiene 80 verbunden, also normalerweise ausgeschaltet.

Soweit die Versorgungsleitungen zu den einzelnen Schaltkreisen von Figur 2 nicht im einzelnen gezeigt sind, ist in den entsprechenden Schaltkreisen durch "o" angedeutet, daß diese Schaltkreise an die direkt mit dem Ausgang der Langzeitbatterie 70 verbundene Leitung 128 angeschlossen sind. Umgekehrt sind solche Schaltkreise, die mit der getakteten Versorgungsschiene 80 verbunden sind, durch ein "x" gekennzeichnet.

Man erkennt, daß insbesondere die niederohmigen Magnetfeldrichtungssensoren 36, 38, die einen höheren Strombedarf haben, die Komparatoren 84, 86, die in der Praxis eine hohe Auflösung von 1 Promille der Betriebsspannung haben müssen und daher ebenfalls verhältnismäßig viel Strom benötigen, der Spannungsteiler 92, die Umschalter 88, 90 sowie die zugeordneten Festwertspeicher 98, 100 und die bistabilen Kippschaltungen 106, 108 nur über sehr kurze Zeitspannen mit Strom versorgt werden. Hieraus ergibt sich insgesamt ein sehr niederer Stromverbrauch. Bei Verwendung von Magnetfeldrichtungssensoren in Form von Widerstandsteilern (z.B. Sony DM106A) integrierter Schaltkreise für die Komparatoren 84, 86 und die nachgeschalteten bistabilen Kippschaltungen 106, 108 sowie integrierter Schaltkreise für die weiteren Bauelemente der Auswerteschaltung erhält man durch das Takten der Versorgungsschiene 80 in der Praxis unter Verwendung der besten derzeit zur Verfügung stehenden Langzeitbatterien und beim Betrieb des Meßgerätes mit Nenndurchfluß über bis zu 25 % der gesamten Betriebszeit eine Batterielebensdauer von über 9 Jahren. Diese Zeitspanne entspricht denjenigen Zeitspannen, in welchen Wasserzähler zur Nacheichung sowieso ausgetauscht werden.

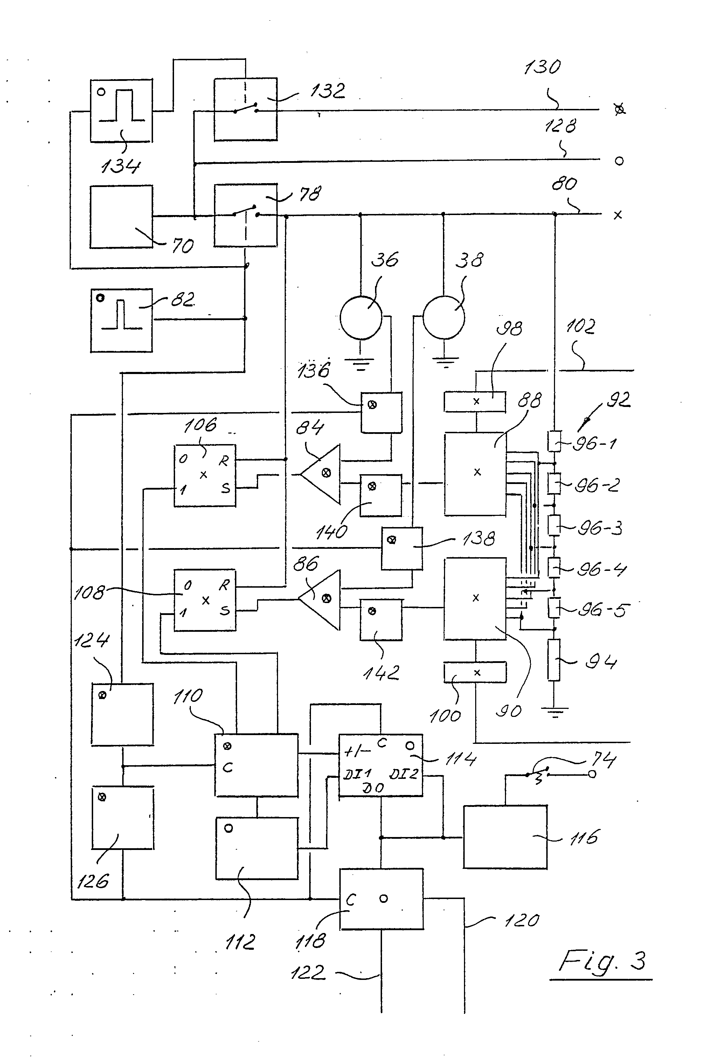

Das abgewandelte Ausführungsbeispiel nach Figur 3 unterscheidet sich vom Ausführunsbeispiel nach Figur 2 dadurch, daß man zwei mit gleicher Frequenz jedoch unterschiedlicher Impulsbreite getaktete Versorgungsschienen hat, an welche schnelle bzw. weniger schnelle Schaltkreise der Auswerteschaltung angeschlossen sind. Im übrigen sind Schaltkreise und Bauelemente, die unter Bezugnahme auf Figur 2 schon erläuterten Schaltkreisen und Bauelementen entsprechen, wieder mit denselben Bezugszeichen versehen.

Die mit breiteren Impulsen getaktete zweite Versorgungsschiene ist in der Zeichnung mit 130 bezeichnet. Sie ist über einen zweiten steuerbaren Versorgungsschalter 132 mit dem Ausgang der Langzeitbatterie 70 verbunden. Der Versorgungsschalter 132 wird durch eine monostabile Kippstufe 134 gesteuert, welche durch das Ausgangssignal des Taktgebers 82 getriggert wird. Schaltkreise, welche an die zweite Versorgungsschiene 130 angeschlossen sind, sind durch " ⊗ " gekennzeichnet. Hierzu gehören insbesondere die Komparatoren 84, 86.

Um trotz langsamer arbeitender Komparatoren 84, 86 die viel Strom benötigenden Magnetfeldrichtungssensoren 36, 38 und den ebenfalls viel Strom benötigenden Spannungsteiler 92 an die mit sehr kurzen Impulsen getaktete erste Versorgungsschiene 80 anschließen zu können, sind den Meßsignal-Eingängen der Komparatoren 84, 86 Meßsignalspeicher 136, 138, den Referenzsignaleingängen der Komparatoren Referenzsignalspeicher 140, 142 vorgeschaltet.

Die Meßsignalspeicher 136, 138 haben den in Figur 5 näher gezeigten Aufbau.

Der Speichereingang ist über eine Diode 144 mit einem Kondensator 146 verbunden, dessen zweite Klemme geerdet ist. über den Kondensator 146 ist ein steuerbarer Kurzschlußschalter 148 geschaltet. Dessen Steuerklemme ist mit dem Ausgang des Verzögerungskreises 126 verbunden, wie aus Figur 3 ersichtlich. Der Kondensator 146 ist so ausgelegt, daß er innerhalb der Dauer eines vom Taktgeber 82 erzeugten Impulses auf einen stationären Wert aufgeladen wird und die an ihm erhaltene Spannung für einige µsec hält, ausreichend lange, damit der zugeordnete Komparator seinen Signalvergleich durchführen kann.

Die Referenzsignalspeicher 140, 142 sind ähnlich aufgebaut wie die Meßsignalspeicher, nur entfällt dort der Kurzschlußschalter 148. Damit braucht im nächsten Arbeitszyklus nur der Ladungsverlust des Kondensators ausgeglichen zu werden, nachdem sich die Referenzspannung von einem Arbeitszyklus zum nächsten in der Praxis nicht ändert.

Figur 5 zeigt schematisch den geometrischen Aufbau eines der Magnetfeldrichtungssensoren 36, 38.

Auf einem isolierenden Substrat 152 ist eine Leiterbahn aufgedruckt, die aus einem Material mit vom anliegenden Magnetfeld abhängigem spezifischem Widerstand besteht.

Die Leiterbahn hat einen ersten meanderförmig verlaufenden Bereich 154 mit langen Abschnitten in in Figur 5 vertikaler Richtung, sowie einen zweiten Bereich 156 mit langen Abschnitten in in Figur 5 horizontaler Richtung. Die Enden der Leiterbahn werden an die Versorgungsschiene 80 bzw. Erde angeschlossen, wie in den Figuren 2 und 3 gezeigt, während ein Mittelabgriff 158 das die Magnetfeldrichtung charakterisierende SensorAusgangssignal bereitstellt. Dreht man das Magnetfeld um 90 Grad von einer in Figur 5 mit $B_1$ bezeichneten Ausgangsrichtung über eine Zwischenrichtung 82 in eine zur Ausgangsrichtung senkrechte Richtung $B_3$, so erhält man am Mittelabgriff 158 eine halbe Sinuswelle. Dreht man das Magnetfeld um weitere 90 Grad weiter, so liegen widerstandsmäßig wieder die gleichen Verhältnisse vor wie beim Ausgangsfeld $B_1$, da der elektrische Widerstand der Leiterbahn nur vom Betrag der Magnetfeldprojektion, nicht aber vom Vorzeichen des Feldes abhängt.

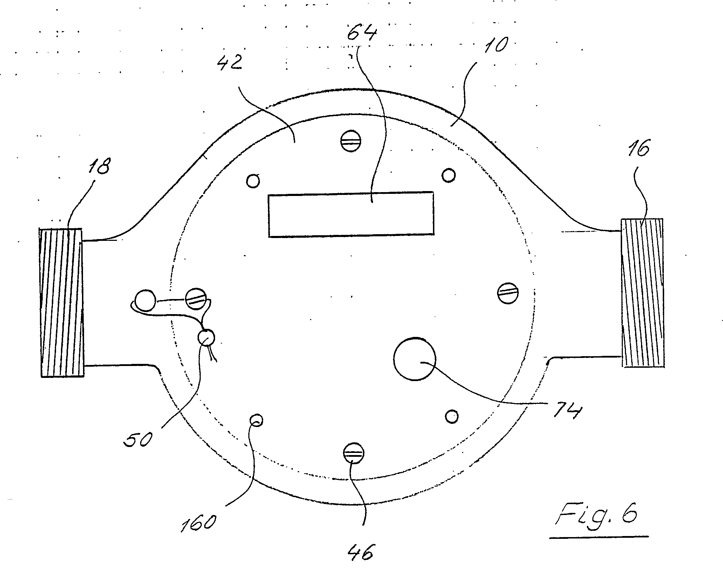

Figur 6 zeigt einen abgewandelten Wasserzähler, bei welchem die Auswerteeinheit 58 ebenfalls fest auf der Unterseite des Gehäusedeckels 42 angebracht ist, ebenso wie die Magnetfeldrichtungssensoren 36, 38. Am Gehäusedeckel 42 ist nun direkt die LCD-Anzeige 64 angebracht, ebenso der Taster 74. Wie Figur 6 zeigt, hat der Gehäusedeckel 42 unter einem Winkelabstand von 45 aufeinander folgende Durchgangsöffnungen 160 für die Schrauben 46, so daß der Gehäusedeckel 42 zusammen mit den Fühlern und der Auswerteeinheit in unterschiedlicher Winkelstellung auf das Gehäuse 10 aufgesetzt werden kann, insbesondere mit parallel zur Strömungsrichtung ausgerichteter LCD-Anzeige 64 und hierzu senkrecht ausgerichteter LCD-Anzeige.

Wie aus der obigen Beschreibung von Ausführungsbeispielen ersichtlich, entspricht der beschriebene Wasserzähler in seinem strömungstechnischen Teil vollständig einem herkömmlichen Wasserzähler, bei welchem der Permanentmagnet 32 jedoch zum Antrieb eines mechanischen Zählwerkes dient. Dadurch, daß man einen abgewandelten Gehäusedeckel 42 mit angebauten Magnetfeldrichtungssensoren und angebauter Anzeigeeinheit anstelle eines herkömmlichen Gehäusedeckels in einen schon existierenden Wasserzähler einbaut kann man diesen einfach auf elektronische Ablesung umrüsten, wodurch man unter Einhaltung der gleichen Meßgenauigkeit auch einen höheren Durchfluß-Arbeitsbereich erhält, da der Korrekturspeicher 112 eine sehr einfache und elegante Korrektur geschwindigkeitsbedinger Nichtlinearitäten in der Drehung des Meßrades 26 ermöglicht. Man kann so auch leicht an herkömmlichen Wasserzählern die Möglichkeit einer elektronischen Fernauslösung schaffen. Auch eine Anpassung an das Messen von Flüssigkeiten unterschiedlicher Viskosität ist einfach möglich. Wo der Massendurchsatz ermittelt werden soll, kann dies einfach durch Umprogrammierung des Korrekturspeichers 112 unter Berücksichtigung der Dichte des zu messenden Mediums erfolgen.

Da das Meßrad 26 keine mechanische Last mehr antreiben kann, wird eine erhebliche Verbesserung der Messung kleiner Durchsätze möglich. In der Praxis können noch Umlaufzeiten des Meßrades von 20 Sekunden zuverlässig erfaßt werden (kleinste Umlaufzeit etwa 20 msec).

Die Eichung des Zählers kann im Bedarfsfalle durch Umprogrammierung der Festwertspeicher 98, 100 noch einfach am Einsatzort erfolgen. Hierdurch kann man sogar noch Nichtlinearitäten im Meßverhalten ausgleichen, die gar nicht durch den Wasserzähler selbst sondern das Leitungssystem bedingt sind, innerhalb dessen der Zähler angebracht wird. Dadurch, daß man über die Festwertspeicher 98, 100 und die Umschalter 88, 90 die Referenzspannung für die Magnetfeldrichtungssensoren sehr einfach einstellen kann, braucht man auch an die Toleranzen derartiger Sensoren keine hohen Ansprüche zu stellen. Dies erlaubt die Verwendung nicht speziell ausgesuchter Sensoren aus der Großserienfertigung.

Dadurch, daß der Versorgungsschalter 78 sowohl die Stromversorgung der Komparatoren 84, 86 als auch die Stromversorgung des Spannungsteilers 92 schaltet, haben etwaige Spannungsabfälle im Versorgungsschalter 78 keinerlei Auswirkung auf das Meßergebnis.

Aufgrund seines robusten und einfachen Aufbaus eignet sich der oben im einzelnen beschriebene Zähler auch gut für Anwendungen, bei denen mit Erschütterungen und Stößen gerechnet werden muß.

## Ansprüche

1. Volumen- oder Durchfluß-Meßgerät, mit einem Gehäuse, in welchem eine mit einem Einlaß und einem Auslaß verbundene Meßkammer ausgebildet ist, mit einem in der Meßkammer umlaufenden Meßrad, mit einem Permanentmagneten, der vom Meßrad getragen ist und ein bezüglich der Drehachse des Meßrades nicht rotationssymmetrisches Magnetfeld erzeugt, und mit einer durch das mit dem Meßrad umlaufende Magnetfeld betätigten Auswerteeinrichtung, welche durch eine nichtmagnetische Wand strömungsmitteldicht von der Meßkammer getrennt ist, dadurch gekennzeichnet, daß die Auswerteeinrichtung eine Magnetfeldrichtunssensoranordnung (36, 38), eine an diese angeschlossene Komparatoranordnung (84, 86, 106, 108) und eine durch die Komparatoranordnung angesteuerte Rechenschaltung (110 bis 114) aufweist.

2. Meßgerät nach Anspruch 1, wobei die Magnetisierung im Permanentmagneten durchgehend parallel zu einer Durchmesserlinie des Meßrades verläuft, dadurch gekennzeichnet, daß die Sensoranordnung (36, 38) eine Richtcharakteristik mit endlicher Projektion in einer zur Laufebene des Meßrades (26) parallelen Ebene aufweist, wobei die Achse dieser Richtcharakteristik vorzugsweise parallel zur Laufebene des Meßrades (26) ausgerichtet ist.

3. Meßgerät nach Anspruch 1 oder 2, dadurch gekennzeichnet, daß die Sensoranordnung (36, 38) von einem Gehäusedeckel (42) getragen ist.

4. Meßgerät nach Anspruch 3, dadurch gekennzeichnet, daß die Rechenschaltung (110 bis 114) und vorzugsweise auch eine von dieser angesteuerte Anzeigeeinheit (116) ebenfalls von dem Gehäusedeckel (42) getragen ist.

5. Meßgerät nach Anspruch 4, dadurch gekennzeichnet, daß der Gehäusedeckel (42) in unerschiedlicher Winkelausrichtung auf das Gehäuse (10) aufsetzbar ist.

6. Meßgerät nach Anspruch 1 oder 2, dadurch gekennzeichnet daß die Rechenschaltung (110 bis 1 14) sowie eine durch diese angesteuerte Anzeigeeinheit (116) in einem getrennten Gehäuse (60) untergebracht ist und über ein Kabel (56) mit der Sensoranordnung (36, 38) verbunden ist.

7. Meßgerät nach Anspruch 6, dadurch gekennzeichnet, daß das Kabel (56) mit einer unter Aufbrechen von Selbsthemmung biegbaren Kabelhülle umgeben ist

8. Meßgerät nach einem der Ansprüche 1 bis 7, dadurch gekennzeichnet daß die Sensoranordnung (36, 38), die Komparatoranordnung (84, 86, 106, 108) ein Referenz-Spannungsteiler (92) und die Rechenschaltung (110 bis 114) durch eine Langzeitbatterie (70) gespeist werden.

9. Meßgerät nach Anspruch 8, dadurch gekennzeichnet, daß die Sensoranordnung (36, 38) die Komparatoranordnung (84, 86, 106, 108) und die Rechenschaltung (110 bis 114) sowie der Referenz-Spannungsteiler (92) an eine Versorgungsschiene (80) angeschlossen sind, welche über einen von einem freilaufenden Taktgeber (82) gesteuerten Versorgungsschalter (78) in Abständen kurzfristig mit der Langzeitbatterie (70) verbunden wird, und daß die Arbeitsfrequenz des Taktgebers (82) im Hinblick auf die maximale Arbeitsdrehzahl des Meßrades (26) gewählt ist.

10. Meßgerät nach einem der Ansprüche 1 bis 9 dadurch gekennzeichnet, daß die Sensoranordnung aus Magnetfeldrichtungssensoren (36, 38) besteht, die ihrerseits jeweils eine in zwei Teilbereichen (154, 156) mäanderförmig gelegte Leiterbahn aufweisen, wobei die langen Mäander-Teilstücke in den beiden Teilbereichen (154 1 56) senkrecht zueinander stehen und ein Mittenabgriff (158) zwischen diesen Teilbereichen das Sensorausgangssignal bereitstellt.

Fig. 1

*Fig.2*

Fig. 3

EP 0 329 040 A2

Fig. 4

Fig. 5

Fig. 6